Europäisches Patentamt

European Patent Office

Office européen des brevets

(11) Veröffentlichungsnummer : **0 082 213**
**B1**

(12) **EUROPÄISCHE PATENTSCHRIFT**

(45) Veröffentlichungstag der Patentschrift :
16.04.86

(21) Anmeldenummer : 81110665.7

(22) Anmeldetag : 21.12.81

(51) Int. Cl.⁴ : **E 04 B 1/76**, F 24 J 3/06,
E 04 D 11/00, E 04 D 13/00,
E 04 C 2/52

(54) Dacheindeckung oder Wandverkleidung.

(30) Priorität : **19.12.80 DE 3048113**

(43) Veröffentlichungstag der Anmeldung :
**29.06.83 Patentblatt 83/26**

(45) Bekanntmachung des Hinweises auf die Patenterteilung : **16.04.86 Patentblatt 86/16**

(84) Benannte Vertragsstaaten :
**AT BE CH DE FR GB IT LI NL SE**

(56) Entgegenhaltungen :
EP-A- 0 014 355
DE-A- 2 702 938
DE-A- 3 018 953
DE-U- 7 705 030
DE-U- 7 904 356
DE-U- 8 013 703

(73) Patentinhaber : **Straub, Theodor**

**D-8857 Gottmannshofen (DE)**

(72) Erfinder : **Straub, Theodor**

**D-8857 Gottmannshofen (DE)**

(74) Vertreter : **Patentanwälte Kirschner & Grosse
Herzog-Wilhelm-Strasse 17
D-8000 München 2 (DE)**

Beschreibung

Die Erfindung betrifft eine Dacheindeckung oder eine Wandverkleidung gemäß dem Oberbegriff des Anspruchs 1. Die Erfindung betrifft insbesondere die Eindeckung eines Energie- oder Absorberdaches oder die Ausbildung einer vorgehängten Energie- oder Absorberfassade.

Durch die DE-AS 27 02 939 ist eine Dacheindeckung bekanntgeworden, bei welcher Blechtafeln vorgesehen sind, die einen etwa halbkreisförmig nach unten abgebogenen Rand aufweisen und in etwa in der Mitte eine halbkreisförmig aufgebogene, einen Hohlraum bildende Verbindungsleiste besitzen, welche durch einen Umschlag um 180° fortgesetzt ist. Die Blechtafel läuft in einen umgebördelten Plattenrand aus, in welchen mehrere, an den Dachlatten befestigbare Halter einsetzbar sind. Der dem umgebördelten Rand gegenüberliegende halbkreisförmig nach unten abgebogene Rand dient dazu, die mittlere Verbindungsleiste hakenförmig zu umgreifen, so daß ein Hohlraum umgrenzt wird, in welchem ein als Rohr ausgebildetes Verbindungsprofil angeordnet werden kann. Die Abstände zwischen den umgebogenen Rändern bzw. den Rändern und der Verbindungsleiste sind so gewählt, daß jeweils ein durch die Ränder und die Verbindungsleiste umgrenzter Hohlraum auf einer Dachlatte zu liegen kommt, was deshalb zweckmäßig ist, da die Verbindungsleisten als auch die umgebördelten Ränder mittels Haltern und Stützgliedern an den Dachlatten befestigt sind.

Bei der Montage der vorbekannten Dacheindeckung werden die Blechtafeln jeweils mit dem nach unten umgebogenen Rand auf ein Verbindungsprofil aufgehängt und mittels dem am gegenüberliegenden Ende angeordneten Halter unter Spannung an der Dachlatte befestigt. Damit die Zugspannungen über die gesamte Dacheindeckung gleichmäßig verteilt werden können, müssen die rohrförmigen Verbindungsprofile in den Hohlräumen frei beweglich gelagert sein.

Die vorbekannte Dachkonstruktion weist mehrere Nachteile auf. Zunächst kann nicht gewährleistet werden, daß die Dachlatten stets einen vorbeschriebenen Abstand zueinander aufweisen, so daß es vorkommen kann, daß unterschiedlich große Zugkräfte in das rohrförmige Verbindungsprofil eingeleitet werden, was zur Folge hat, daß das Rohr entweder locker in dem von zwei benachbarten Blechtafeln gebildeten Hohlraum geführt ist oder aber aus dem Hohlraum herausgezogen wird. In beiden Fällen ist unvermeidbar, daß eine gewünschte satte Anlage des Rohres an die Wandung der Blechtafeln nicht gewährleistet ist, so daß ein schlechter Wärmeübergang von den Blechtafeln auf das in den Rohren strömende Trägermedium stattfindet. Da das Verbindungsrohr gleichzeitig zum Verspannen zweier benachbarter Dacheindeckungselemente des stufenförmig aufzubauenden Daches dient, ist ein Austauschen der Rohre bzw.

ein Nachrüsten des Daches mit Rohren nicht möglich, ohne daß das Dach wenigstens teilweise wieder abgedeckt wird. Die Rohre sind auch dadurch einer Kontrolle nicht zugänglich, da sie von den nach unten gebogenen Rändern bzw. der zugeordneten Verbindungsleiste nahezu ganz umschlossen werden. Schließlich besteht die bekannte Dachkonstruktion aus vielen Einzelelementen, deren Montage Fachkräfte mit Spezialkenntnissen erfordert, wodurch einerseits die Lagerhaltung und Produktionskosten und andererseits die Montage bzw. Wartung des Daches erhöhte Selbstkosten verursachen. Darüber hinaus ist der Gesamtwirkungsgrad eines mit der bekannten Dacheindeckung hergestellten Energie- bzw. Absorberdaches ungünstig, da die Verbindungsrohre für den Dachaufbau notwendige Spannmittel darstellen, also z. B. an der kaum bestrahlten Nordseite eines Hauses ebenfalls wie an der Südseite vorhanden sein müssen. Zur Vermeidung dieses Nachteiles wäre es zwar denkbar, das Dach je nach der Himmelsrichtung mit verschiedenen Eindeckungselementen auszustatten, jedoch ergeben sich hier wieder zusätzliche Nachteile hinsichtlich der Kompatibilität der verschiedenen Dacheindeckungssysteme, hinsichtlich des optischen Eindrucks usw.

Durch die DE-OS 28 16 970 ist ferner ein Dach- oder Wandteil mit Wärmeaustauscher bekanntgeworden. Dieses Dach- oder Wandteil besteht aus zwei einen Zwischenraum bildenden parallelen Platten, wobei der Zwischenraum durch eine wärmeisolierende Masse ausgefüllt ist, die mit den Platten fest verbunden ist und Kräfte übertragen kann. Wenigstens eine der beiden Platten ist mit Rohren oder wie Rohre wirkende Hohlräumen verbunden, die an einen Wärmeträgerkreislauf angeschlossen sind. Der Herstellungsaufwand dieser Konstruktion ist allerdings erheblich, da die Wärmeträgerrohre als integrierte Sammelkanäle Bestandteil der Abdeckplatten sind. Darüberhinaus ist wie bei der oben beschriebenen Konstruktion eine Nachrüstung bzw. ein Fortlassen der Wärmetauscherrohre nicht möglich, so daß für Nord- und Südseiten ggfs. unterschiedliche Systeme eingesetzt werden müssen, um eine Verschlechterung des Gesamtwirkungsgrades bzw. eine Verteuerung der Gesamtanlage zu vermeiden. Die durch die DE-OS-28 16 970 beschriebene Konstruktion ist für eine vorgehängte Fassade ferner ungeeignet, da die Fassadenelemente einer vorgehängten Fassade wegen der bereits vorhandenen stabilen Unterkonstruktion nur ein relativ geringes Gewicht aufweisen sollen und keine tragende Funktion zu übernehmen haben.

Aus der EP-A1 0 014 355 und der DE-U-77 05 030 sind Dach- oder Wandelemente mit einem Metallprofil bekannt, in dem eine Sicke zum Einclipsen eines Wärmeübertragungsrohres ausgebildet ist, wobei das Metallprofil die Deckschale des Elementes bildet. Dabei sind die Sicken jeweils in die Profilinnenseite eingerollt, so daß sie bei fertiger Eindeckung des Daches oder fertiger Ausbildung der Fassade dem Inneren der Elemente zugewandt sind. Diese Ausbildung hat den Nachteil, daß die in die Sicken eingeclipsten Wärmeübertragungsrohre bei einer Kontrolle von außen nicht zugänglich sind, und bei Wartungs- und Reparaturarbeiten muß das Dach oder die Fassade wenigstens teilweise abgedeckt bzw. abgebaut werden.

Auch aus der DE-A1-3 018 953 ist eine derartig nachteilige Anordnung bekannt, bei der an der Unterseite einer Abdeckung Sicken ausgebildet sind, unterhalb der Metallrohre verlaufen. Aus der DE-A1-2 702 938 ist schließlich eine Wärmeaustauchvorrichtung bekannt, bei der die Rohre für das Wärmeaustauschmedium zwischen zwei unterschiedlich geformten Serien von Blechtafeln angeordnet und jeweils von der oberen Blechtafel überdeckt sind, weshalb auch hier die Rohre bei fertiggestellter Dacheindeckung nicht von außen zugänglich sind.

Der Erfindung liegt daher die Aufgabe zugrunde, eine Dacheindeckung oder Wandverkleidung der eingangs beschriebenen Art zu schaffen, bei der das verwendete Konstruktionselement sowohl als ein Eindeckungselement für ein Energie- oder Absorberdach als auch als Element für eine vorgehängte Energie- oder Absorberfassade verwendbar ist. Dieses Baukonstruktionselement soll einen einfachen Aufbau besitzen, so daß die Herstellungskosten der Dacheindeckung oder Wandverkleidung reduziert und die Montage vereinfacht werden. Bei der Verwendung als Absorberelement für einen Wärmeträgermittel-Kreislauf soll ein guter Wirkungsgrad bei der Umsetzung von Sonnenenergie in Brauchwärme ermöglicht sein und die Dacheindeckung oder Wandverkleidung soll nach der Montage einfach zu warten bzw. zu reparieren sein. Schließlich soll das verwendete Baukonstruktionselement als kompaktes Element ohne eine Vielzahl von zusätzlichen Montageteilen unmittelbar zur Eindeckung eines Daches bzw. Verkleidung der Wand einsetzbar sein. Diese Aufgabe der Erfindung wird durch die im Kennzeichen des Anspruches 1 angegebenen Merkmale gelöst. Weitere vorteilhafte Ausgestaltungen der in diesen Ansprüchen gekennzeichneten Gegenstände ergeben sich aus den Unteransprüchen.

Die erfindungsgemäße Dacheindeckung oder Wandverkleidung besteht aus einem in sich geschlossenen kompakten Baukonstruktionselement, welches in seiner grundsätzlichen Ausgestaltung sowohl als Dacheindeckungselement als auch als Element für eine vorgehängte Fassade einsetzbar ist. Das Baukonstruktionselement weist im wesentlichen eine profilierte Metalldeckschale auf, in deren Außenseite in einem derartigen Bereich eine Sicke eingerollt ist, in die ein Wärmeübertragungsrohr für ein Wärmeübertragungsmedium einclipsbar ist, die bei fertiggestellter Dacheindeckung oder Wandverkleidung von außen zugänglich bleibt. Das Element kann auch umgebördelte Längsränder oder in Längsrichtung verlaufende Auffalzungen besitzen, in welche in Längsrichtung verlaufende Sicken eingebracht werden. Dabei sind die Sicken in ihrem Krümmungsradius derart ausgestaltet, daß eine Sicke zur Aufnahme des Wärmeübertragungsrohres dient, während die zugeordnete Sicke des benachbarten Elementes die das Rohr aufnehmende Sicke umgreift, so daß eine gewisse Führung und Verklammerung der Elemente stattfindet. Die umgebördelten Ränder zweier benachbarter Elemente sind unterschiedlich lang ausgebildet, so daß der eine Rand über den anderen Rand gefalzt werden kann und dadurch eine schlüssige Verbindung und Abdichtung zweier Elemente erzeugt wird. Da die Ränder der Sicken einen größeren Teil als das Halbsegment des Rohres umschließen, wird das Rohr klammerartig von den Rändern der Sicken gehalten, so daß zusätzliche Spannelemente oder dgl. nicht erforderlich sind. Das Rohr selbst dient nicht als Spannelement und kann je nach der Ausgestaltung des Baukonstruktionselementes nachträglich in die Deckschale eingeclipst werden bzw. aus dieser entnommen werden, so daß für die Nord- und Südseite das gleiche Grundelement verwendbar ist. Hierdurch wird eine aufwendige Lagerhaltung vermieden, und es treten die bekannten Probleme hinsichtlich der Kompatibilität verschiedener Systeme nicht auf.

Beim Einsatz des verwendeten Baukonstruktionselementes bei einer vorgehängten Fassade kann das Rohr in Verbindung mit einem geeigneten Halter auch selbst als Halteeinrichtung für die Baukonstruktionselemente dienen, ohne daß zusätzliche Spann- oder Befestigungseinrichtungen notwendig sind. Da das Rohr in etwa über zwei Drittel seines Umfanges von der Sicke der Deckschale umschlossen ist und unter Federspannung in der Deckschale gehalten wird, kann ein gut wärmeleitendes, relativ weiches Kupferrohr von einem Coil verwendet werden, welches im eingeclipsten Zustand durch die Sicke der Deckschale begradigt und sicher gehalten wird. Die Deckschale kann auf einer Verarbeitungsstraße rollgeformt werden, während das Rohr gleichzeitig von einem Coil abgewickelt und in die ausgeformte Sicke eingedrückt wird. Das verwendete Baukonstruktionselement läßt sich in größerer Länge herstellen, so daß z. B. die gesamte Dachlänge von jeweils einem Element abdeckbar ist.

Zur Verbesserung der Wärmedämmeigenschaften des Daches kann die Deckschale darüber hinaus mit Isolisationsmaterial ausgeschäumt sein. An ihrer Unterseite kann die Deckschale durch eine Leichtmetallfolie abgedeckt sein oder von einer zweiten Deckschale abgedeckt sein, wobei die Seitenwände des Elementes wenigstens teilweise durch Folien aus schlecht leitendem Material zur thermischen Trennung und zur Erzielung einer guten Dampfdichtigkeit geschlossen sind.

Gemäß einem ersten bevorzugten Ausführungsbeispiel einer Dacheindeckung ist vorteilhaft vorgesehen, daß die Seitenteile des verwendeten Baukonstruktionselementes, keilförmig ausgebildet sind, wobei die Keile von einander gegenüberliegenden Seiten in entgegengesetzter Richtung weisen, so daß benachbarte Dacheindeckungselemente übereinander hängbar sind. Die Befestigung kann mittels geeigneter Halter aus Kunststoff erfolgen, die gleichzeitig als Kältebrücken eine unmittelbare Berührung der Metalldeckschale und der Unterkonstruktion vermeiden. Die Leichtmetallfolie, die z. B. aus Aluminium bestehen kann, kann gleichzeitig mit dem Isoliermaterial kontinuierlich auf die rollgeformte Deckschale aufgebracht werden und hat nicht nur die Aufgabe, das Dacheindeckungselement an der Rückseite zu verschließen, sondern wirkt zugleich als Dampfsperre.

Bei einem zweiten bevorzugten Ausführungsbeispiel kann vorteilhaft vorgesehen sein, daß die Seitenteile des Baukonstruktionselementes zum Teil von einer unteren Deckschale und zum Teil von einer thermischen und dampfdichten Folie gebildet sind, derart, daß quaderförmige längliche Dacheindeckungselemente gebildet werden, die unter Zwischenlage von Dichtungselementen sowie Haltern aneinander befestigt werden, wobei die Sicken der umgebördelten Ränder ineinander eingreifen.

Weitere vorteilhafte Ausgestaltungen des Gegenstandes der Erfindung ergeben sich aus den Unteransprüchen. In der Zeichnung sind bevorzugte Ausführungsbeispiele der erfindungsgemäßen Dacheindeckung oder Wandverkleidung dargestellt. Es zeigen :

Figur 1 eine schematische Schnittansicht durch ein Energie- oder Absorberdach, welches unter Verwendung des erfindungsgemäßen Baukonstruktionselementes hergestellt ist ;

Figur 2 eine vergrößerte Teilschnittansicht gemäß Fig. 1, bei welcher insbesondere die Verbindung zweier benachbarter Baukonstruktionselemente gezeigt ist ;

Figur 3 ein weiteres Ausführungsbeispiel für eine vorgehängte Fassade unter Verwendung des erfindungsgemäßen Baukonstruktionselementes ;

Figur 4 eine schematische Schnittansicht durch ein Energie- oder Absorberdach gemäß einem weiteren bevorzugten Ausführungsbeispiel ; und

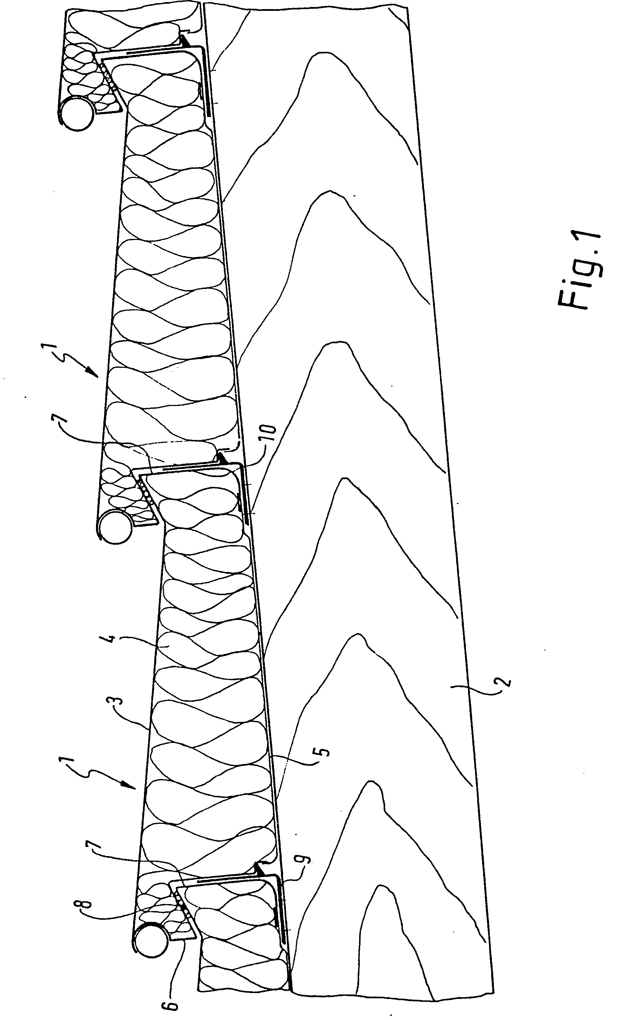

In der Fig. 1 sind mehrere Baukonstruktionselemente 1 schematisch im Querschnitt dargestellt und nebeneinander zur Bildung einer Dacheindeckung auf einem Dachsparren 2 befestigt.

Jedes Baukonstruktionselement besteht aus einer gerollten Deckschale 3, welche mit Isoliermaterial 4 ausgeschäumt ist und an ihrer offenen Unterseite durch eine als Dampfsperre dienende Aluminiumfolie 5 abgedeckt ist.

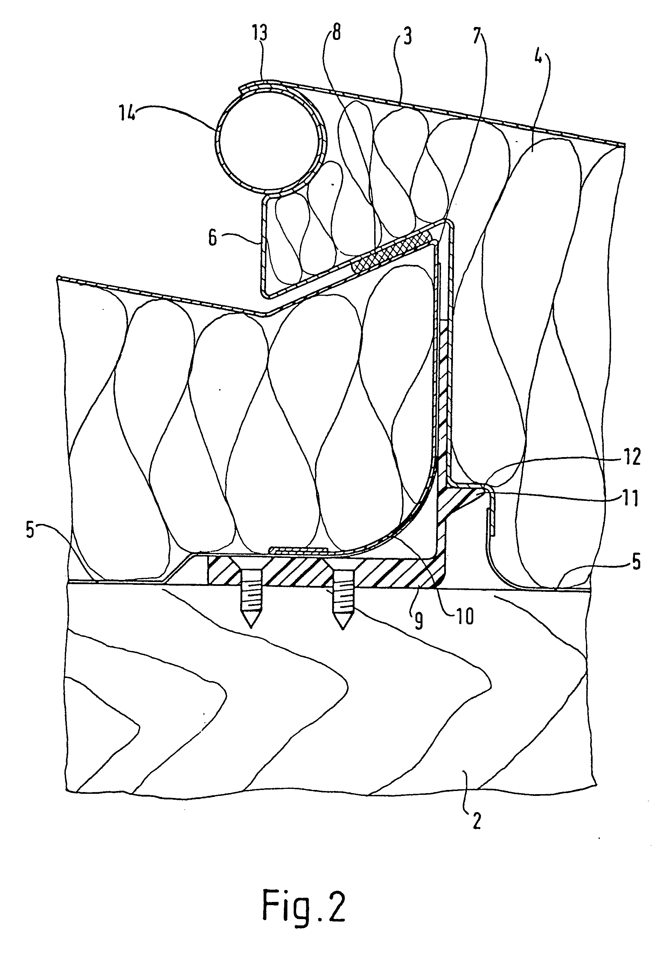

Wie aus den Fig. 1 und 2 zu entnehmen ist, besitzen die Seitenwände 6, 7 der Deckschale 3 eine keilförmige Kontur, wobei der Keil der Seitenwand 6 nach unten weist, während der Keil der Seitenwand 7 nach oben weist. Es wird hierdurch ermöglicht, daß die einzelnen Baukonstruktionselemente unter Zwischenlage einer Dichtung 8 aufeinandergehängt werden können. Zur Befestigung der Baukonstruktionselemente dient ein Halter 9, der in an sich bekannter Weise mit dem Dachsparren 2 verbunden werden kann. Dieser Halter 9, auf welchem sich der untere umgebogene Rand 10 einer Deckschale 3 abstützt, besitzt eine Schulter 11, auf welcher ein stufenförmiger Abschnitt der Seitenwand 6 der Deckschale 3 aufliegt. Da die Deckschale 3 mit der Unterkonstruktion, die z. B. auch von Metallträgern gebildet sein kann, nicht in direkter Berührung steht, sondern sich über den Halter 9 am Sparren 2 abstützt, und da der Halter aus Kunststoff besteht, dient der Halter zugleich als Kältebrücke. Es wäre auch denkbar, daß der Halter mit der Seitenwand 6 oder 7 einer Deckschale 3 verklebt ist, so daß er einen integralen Bestandteil des Baukonstruktionselementes darstellt.

Wie dies insbesondere aus dem oberen Abschnitt der Fig. 2 deutlich zu entnehmen ist, ist der obere Teil der Seitenwand 6 der Deckschale 3 mit einer nach innen ausgeformten Sicke 13 ausgestattet. Die Sicke 13 ist im Querschnitt kreissegmentförmig ausgebildet, wobei die Wandungen der Sicke einen größeren Winkel als 180° umschließen. In die Sicke ist ein Wärmeübertragungsrohr 14 eingeclipst, welches von den Sickenrändern klammerartig umgriffen und festgespannt wird. Da der Außendurchmesser des Wärmeübertragungsrohres 14 dem Innendurchmesser der im Querschnitt kreissegmentförmigen Sicke entspricht, ist gewährleistet, daß das Rohr mit dem größeren Teil seines Umfanges satt gegen die Innenwandung der Sicke anliegt. Hierdurch wird gewährleistet, daß die auf die geneigte ebene Deckfläche der Deckschale 3 auftreffenden Wärmestrahlen über die Deckschale unmittelbar an das in dem Wärmeübertragungsrohr zirkulierende Strömungsmedium abgegeben werden können. Das Wärmeübertragungsrohr 14 ist in an sich bekannter Weise über Flanschverbindungen und Sammelkanäle mit einem Wärmeträgermittel-Kreislauf verbunden.

Da das Wärmeübertragungsrohr 14 frei zugänglich ist, sind die Montage, Demontage und Kontrolle erleichtert. Es läßt sich auf diese Weise z. B. ein Baukonstruktionselement nachträglich mit Wärmeübertragungsrohren ausrüsten, bzw. die Rohre lassen sich auf der Nordseite eines Hauses, auf welcher die Sonneneinstrahlung ohnehin nicht vorhanden ist, zur Einsparung von Gewicht, Kosten und dgl. demontieren.

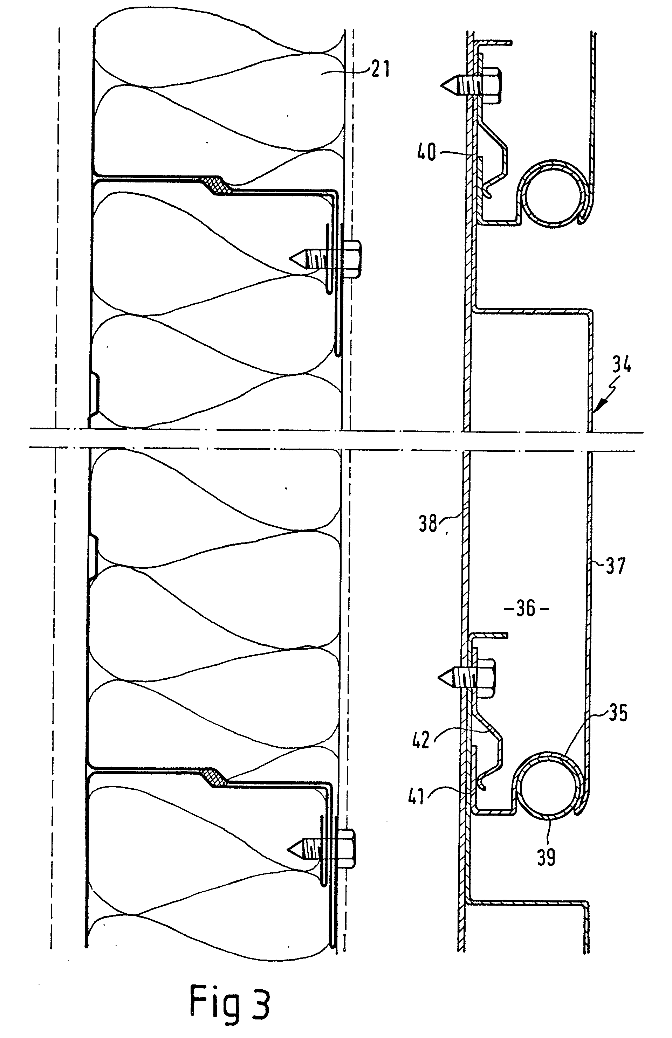

In der Fig. 3 ist ein weiteres Ausführungsbeispiel für eine vorgehängte Fassade dargestellt. Bei diesem Ausführungsbeispiel finden Baukonstruktionselemente 34 Verwendung, bei denen eine Sicke 35 ähnlich dem Ausführungsbeispiel nach Fig. 2 in den Hohlraum 36 einer Deckschale 37 hineingerollt ist. Die Deckschale 37 ist an ihrer in Bezug auf die Fig. 3 linken Seite durch eine Platte 38 verschlossen. Der Vorteil der eingerollten Sicke besteht darin, daß das Wärmeübertragungsrohr 39 von außen zugänglich ist, so daß die Baukonstruktionselemente 34 nachträglich mit Wärmeübertragungsrohren 39 ausgerüstet werden können und aus einer normalen vorgehängten Fassade eine Absorberfassade gemacht werden kann. Die Deckschalen 34 besitzen einen oberen, hakenförmig umgebogenen Rand 40, mit welchem sie gegen die Platte 38 und die Unterkonstruktion geschraubt sind, sowie einen unteren, hakenförmig umgebogenen Rand 41, der mittels eines Federbleches 42 gegen den Rand 40 eines benachbarten Baukonstruktionselementes gedrückt wird.

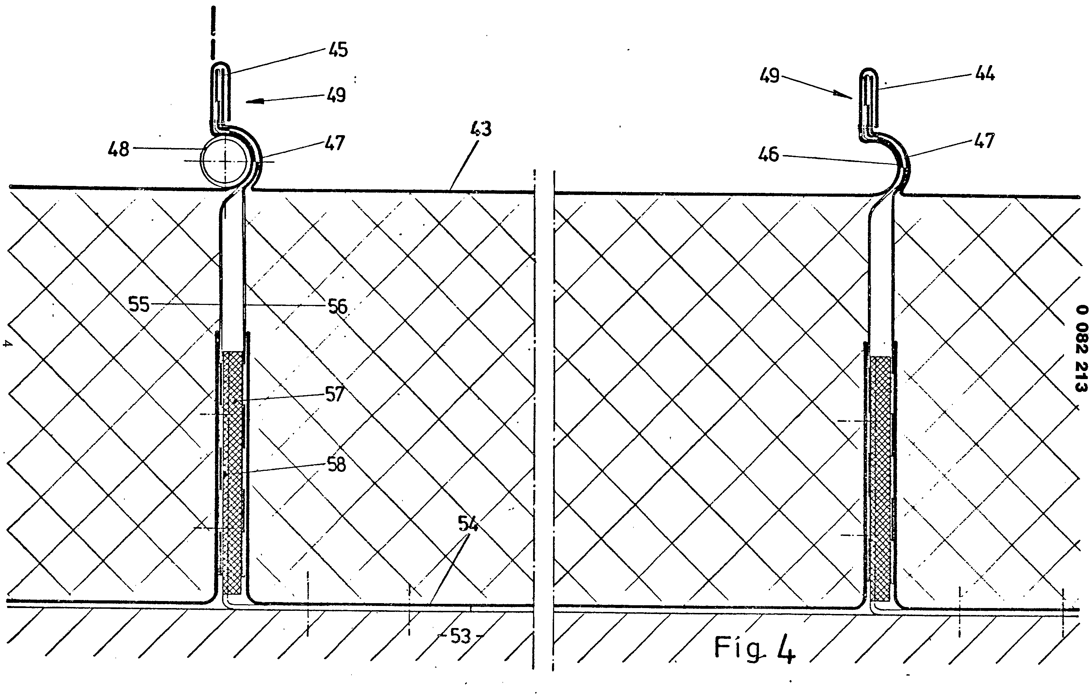

Die Fig. 4 zeigt ein weiteres bevorzugtes Ausführungsbeispiel für das erfindungsgemäße Dacheindeckungselement. Bei diesem Ausführungsbeispiel sind zwei Deckschalen, nämlich eine obere Deckschale 43 und eine untere Deckschale 54 vorgesehen, die seitlich durch Folien 55 und 56 thermisch und dampfdicht abgeschlossen sind.

Die Längsränder 44 und 45 eines Elementes sind nach oben umgebördelt, wobei in Bezug auf die Figur 4 auf der rechten Seite eine Sicke 46 und auf der linken Seite eine Sicke 47 in dem jeweiligen Rand ausgebildet sind. Der Krümmungsradius der Sicke 46 entspricht dem Außenradius des Wärmeübertragungsrohres 48, wobei wie bei den vorhergehenden Ausführungsbeispielen die Sicke 46 einen größeren Winkel als 180° des Rohres 48 umschließt. Dagegen ist der Öffnungsquerschnitt der Sicke 47 größer gestaltet, so daß die Sicke 46 in eine Sicke 47 eines benachbarten Elementes eingeführt werden kann. Ferner ist zu erkennen, daß die Ränder 44 und 45 unterschiedlich lang ausgebildet sind, so daß der Rand 45 über den Rand 44 herübergefalzt werden kann, wobei die Folien 55 und 56 in den Stehfalz eingeschlossen werden. Dadurch ergibt sich eine formschlüssige dichte Verbindung zweier benachbarter Baukonstruktionselemente.

Die Halterung und Verbindung zweier unterer Deckschalen 54 erfolgt unter Einlagerung einer Dichtung 57 mittels eines Halters 58, der in bekannter Weise auf der Dachlatte 53 befestigt werden kann.

Die in der Fig. 4 dargestellten Baukonstruktionselemente verlaufen senkrecht zur Zeichenebene. Sie werden vorzugsweise derart auf den Dachlatten 53 befestigt, daß die Stehfalze 49 von der Oberkante zum unteren Dachrand verlaufen. Die Wärmeübertragungsrohre können in an sich bekannter Weise an ihrem oberen und unteren Ende mit Sammelrohren verbunden sein, die mit einer Wärmepumpe in Verbindung stehen.

**Patentansprüche**

1. Dacheindeckung oder Wandverkleidung unter Verwendung eines Baukonstruktionselementes mit einem Metallprofil, in welchem wenigstens eine Sicke (13, 35, 46, 47) zum Einklipsen eines Wärmeübertragungsrohres (14, 39, 48) ausgeformt ist und welches die Deckschale des Elementes bildet, dadurch gekennzeichnet, daß die Sicken (13, 35, 46, 47) in einen derartigen Bereich der Außenseite der Metallprofile eingerollt sind, daß alle Aufnahmeöffnungen der Sicken bei hergestellter Eindeckung des Daches oder ausgebildeter Wandverkleidung von der Außenseite der Baukonstruktionelemente (1, 34, 43) zugänglich sind.

2. Dacheindeckung oder Wandverkleidung nach Anspruch 1, dadurch gekennzeichnet, daß das Baukonstruktionselement eine Hohlkammer bildet, welche sich in Längsrichtung der Hohlkammer erstreckende, senkrecht zur Gebäudeaußenfläche gerichtete Seitenwände aufweist (Fig. 2, 3), die wenigstens teilweise außerhalb des Überlappungsbereiches liegen, und daß die Sicke (13, 35) wenigstens in eine senkrechte Seitenwand eingeformt ist.

3. Dacheindeckung oder Wandverkleidung nach Anspruch 1, dadurch gekennzeichnet, daß das Baukonstruktionselement eine Hohlkammer bildet, welche sich in Längsrichtung der Hohlkammer erstreckende Seitenwände (6, 7) mit gegensinnig gerichteten Keilen aufweist, derart, daß benachbarte Blechprofile ineinanderhängbar sind, und daß die Sicke (13) in dem oberen freien Seitenwandabschnitt (6) der Hohlkammer ausgebildet ist, der den Seitenwandabschnitt (7) eines benachbarten Elementes überragt.

4. Dacheindeckung oder Wandverkleidung nach Anspruch 1, dadurch gekennzeichnet, daß die Sicke (46, 47) in der Deckschale (43) an wenigstens einem Rand des Baukonstruktionselementes, vorzugsweise einem Längsrand, durch Umbördeln gebildet ist und eine in Längsrichtung verlaufende Auffalzung aufweist.

5. Dacheindeckung oder Wandverkleidung nach Anspruch 3, dadurch gekennzeichnet, daß die in den umgebördelten Rändern (44, 45) angeordneten Sicken (46, 47) gleichsinnig gekrümmt sind, wobei der Krümmungsradius der ersten Sicke (46) dem Außenradius des einklipsbaren Wärmeübertragungsrohres (48) und der Krümmungsradius der zweiten Sicke (47) dem Außenradius der ersten Sicke (46) entspricht.

6. Dacheindeckung oder Wandverkleidung nach Anspruch 3, dadurch gekennzeichnet, daß die in den umgebördelten Rändern (44, 45) angeordneten Sicken gegensinnig gekrümmt sind, wobei bei der Paarung zweier Baukonstruktionselemente die Krümmungsradien der Sicken des einen Elementes dem Außenradius des einklipsbaren Wärmeübertragungsrohres und die Krümmungsradien der Sicken des anderen Elementes dem Außenradius der Sicken des ersten Elementes entsprechen.

7. Dacheindeckung oder Wandverkleidung, dadurch gekennzeichnet, daß das in seinem Inneren mit einer Wärmedämmung versehene Metallprofil (1) einen an die Sicke (13) angrenzenden Hohlraum (19) aufweist.

**Claims**

1. A roof cover or wall lining incorporating a constructional element with a metal section in which at least one groove (13, 35, 46 and 47) is formed for clipping onto a heat transmitting tube (14, 39 and 48) and which forms the covering shell of the element characterized in that the grooves (13, 35, 46 and 47) are rolled into such a part of the outer side of the metal sections that all the receiving openings of the grooves are accessible from the outside of the constructional elements (1, 35 and 43) when the roof cover or the wall lining has been installed.

2. The roof cover or wall lining as claimed in claim 1 characterized in that the constructional element forms a hollow chamber which has wide walls (figures 2 and 3) stretching in the length direction of the hollow chamber and normal to the outer surface of the building, such side walls furthermore being at least in part placed outside the overlap zone, and in that the groove (13 and 35) is formed in at least one upright side wall.

3. The roof cover or wall lining as claimed in claim 1 characterized in that the constructional element forms a hollow chamber with has side walls (6 and 7), stretching in the length direction of the hollow chamber, with oppositely directed wedges in such a way that adjacent sheet metal sections are able to be hooked together and the groove (13) is formed in the upper free side wall section (6) of the hollow chamber, which projects past the side wall section (7) of an adjacent element.

4. The roof cover or wall lining as claimed in claim 1 characterized in that the groove (46 and 47) in the roof shell (43) is formed at one edge at least of the constructional element, preferably a longitudinal edge, by crimping same and has an outwardly directed fold extending in the longitudinal direction.

5. The roof cover or wall lining as claimed in claim 3 characterized in that the grooves (46 and 47) formed in the crimped edges (44 and 45) are curved in the same direction and the radius of such curvature of the first groove (46) is equal to the external radius of the heat transmitting tube (48) to be clipped in place and the radius of curvature of the second groove (47) is the same as the external radius of the first groove (46).

6. The roof cover or wall lining as claimed in claim 3 characterized in that the grooves in the crimped edges (44 and 46) are curved in opposite directions and the arrangement in pairs of two constructional elements is such the radiuses of curvature of the grooves of the one element are equal to the external radius of the heat transmitting tube to be clipped in place and the radiuses of curvature of the grooves of the other element are equal to the external radius of the grooves of the first element.

7. The roof cover or wall lining as claimed in claim 1 characterized in that the metal section (1), internally provided with thermal insulation, has a hollow chamber (19) adjacent to said groove (13).

## Revendications

1. Couverture de toit ou parement de cloison faisant usage d'un élément de construction comprenant un profilé métallique, dans lequel au moins une moulure (13, 35, 46, 47) est ménagée pour enclipser un tube de transfert thermique (14, 39, 48), et qui constitue l'enveloppe de recouvrement de l'élément, caractérisé par le fait que les moulures (13, 35, 46, 47) sont encastrées par roulage dans une région de la face externe des profilés métalliques, telle que toutes les ouvertures réceptrices des moulures soient accessibles à partir de la face externe des éléments de construction (1, 34, 43) lorsque la couverture de toit est confectionnée, ou que le parement de cloison est effectué.

2. Couverture de toit ou parement de cloison selon la revendication 1, caractérisé par le fait que l'élément de construction forme une cavité présentant des parois latérales qui s'étendent dans le sens longitudinal de la cavité, sont orientées perpendiculairement à la surface externe du bâtiment (figures 2, 3) et sont reléguées au moins partiellement à l'extérieur de la zone de chevauchement ; et par le fait que la moulure (13, 35) est ménagée dans au moins une paroi latérale verticale.

3. Couverture de toit ou parement de cloison selon la revendication 1, caractérisé par le fait que l'élément de construction forme une cavité présentant des parois latérales (6, 7) qui s'étendent dans le sens longitudinal de la cavité et comportent des coins orientés dans des directions opposées, de telle sorte que des profilés en tôle voisins puissent être accrochés les uns dans les autres ; et par le fait que la moulure (13) est façonnée dans la région supérieure libre de la paroi latérale (6) de la cavité qui fait saillie au-delà de la région de la paroi latérale (7) d'un élément voisin.

4. Couverture de toit ou parement de cloison selon la revendication 1, caractérisé par le fait que la moulure (46, 47) est formée par ourlage dans l'enveloppe de couverture (43) sur au moins un bord de l'élément de construction, de préférence un bord longitudinal, et présente une pliure s'étendant dans le sens longitudinal.

5. Couverture de toit ou parement de cloison selon la revendication 3, caractérisé par le fait que les moulures (46, 47) situées dans les bords ourlés (44, 45) sont courbées dans des sens opposés, le rayon de courbure de la première moulure (46) correspondant au rayon externe du tube de transfert thermique (48) pouvant être enclipsé, et le rayon de courbure de la seconde moulure (47) correspondant au rayon externe de la première moulure (46).

6. Couverture de toit ou parement de cloison selon la revendication 3, caractérisé par le fait que les moulures situées dans les bords ourlés (44, 45) sont courbées dans des sens opposés et, lors de la solidarisation de deux éléments de construction, les rayons de courbure des moulures de l'un des éléments correspondent au rayon externe du tube d'échange thermique pouvant être enclipsé, et les rayons de courbure des moulures de l'autre élément correspondent au rayon externe des moulures du premier élément.

7. Couverture de toit ou parement de cloison, caractérisé par le fait que le profilé métallique (1), pourvu d'une isolation thermique dans son espace interne, présente une cavité (19) contiguë à la moulure (13).

Fig.1

0 082 213

Fig.2

Fig 3

Fig 4

0 082 213